(19) Europäisches Patentamt
European Patent Office
Office européen des brevets

(11) EP 4 410 543 A1

(12) EUROPEAN PATENT APPLICATION
published in accordance with Art. 153(4) EPC

(43) Date of publication:
07.08.2024 Bulletin 2024/32

(21) Application number: 22875919.7

(22) Date of filing: 20.09.2022

(51) International Patent Classification (IPC):
*B32B 27/00* (2006.01) *B32B 7/023* (2019.01)
*G02B 21/34* (2006.01)

(52) Cooperative Patent Classification (CPC):
B32B 7/023; B32B 27/00; G02B 21/34

(86) International application number:
PCT/JP2022/034917

(87) International publication number:
WO 2023/054048 (06.04.2023 Gazette 2023/14)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 30.09.2021 JP 2021160531

(71) Applicant: FUJIFILM Corporation
Tokyo 106-8620 (JP)

(72) Inventors:
- SASADA Yasuyuki
Minamiashigara-shi, Kanagawa 250-0193 (JP)
- HARA Miyoko
Minamiashigara-shi, Kanagawa 250-0193 (JP)
- SUZUKI Takato
Minamiashigara-shi, Kanagawa 250-0193 (JP)

(74) Representative: HGF
HGF Limited
1 City Walk
Leeds LS11 9DX (GB)

# (54) COVER FILM

(57) An object of the present invention is to provide a cover film including a support and a polymer layer, in which a mass reduction can be suppressed and peeling of an adhesive site between the cover film and an adherend can be suppressed in a case where a laminate of the cover film and the adherend is stored for a long period of time.

The cover film of the present invention includes a support and a polymer layer containing a polymer, in which a surface haze of the cover film is 0.5% to 50%, and a content of an ester compound satisfying a predetermined requirement 1 in the support is 1% by mass or less with respect to a total mass of the support.

EP 4 410 543 A1

## Description

## BACKGROUND OF THE INVENTION

1. Field of the Invention

The present invention relates to a cover film.

2. Description of the Related Art

In a medical field, a method of observing a specimen for microscopic observation with a microscope has been known in cytodiagnosis, histopathology, and the like. Examples of a method of preparing the specimen for microscopic observation include a method of automatically overlapping a substrate on which a test subject is placed with a cover film using an automatic enclosing device to adhere (hereinafter, also referred to as "enclose") the cover film and the substrate, the cover film having a polymer (for example, an adhesive, a compound which can be used as the adhesive, or the like) formed on a support in advance, the substrate being a substrate (for example, a glass slide or the like) onto which few drops of a solvent capable of swelling and/or dissolving the polymer (hereinafter, also referred to as "enclosing solution"; for example, xylene or the like) is dropped. According to this method, it is possible to produce a specimen for microscopic observation, in which the test subject is fixed between the substrate and the cover film.

For example, JP2008-003506A discloses a cover film for a microscope, which consists of a support containing a predetermined amount of a plasticizer and an adhesive layer formed on the support, is placed to cover a test subject on a glass slide, and is swollen or dissolved by an enclosing solution to be fixed to the glass slide.

## SUMMARY OF THE INVENTION

As disclosed in JP2008-003506A, the support of the cover film in the related art, including the support and the polymer layer, may contain an ester compound represented by a phosphoric acid ester, and these components contribute to plasticization of the support and the polymer layer.

It has been found that, in a case where the cover film containing such an ester compound is stored in a high temperature and high humidity environment, a hydrolyzate having a low pK is generated by hydrolysis of the above-described ester compound, a component constituting the support is decomposed by the generated hydrolyzate, the mass of the cover film is reduced, and thus the film is embrittled. Therefore, it is required to reduce an amount of the above-described ester compound used in the support of the cover film.

On the other hand, it has been found that, in a case where the amount of the above-described ester compound used is reduced, peeling may occur between the cover film and the adherend in a case where a laminate of the cover film and the adherend is stored for a long period of time.

The present invention has been made in view of the above-described circumstances, and an object of the present invention is to provide a cover film including a support and a polymer layer, in which a mass reduction of the cover film can be suppressed and peeling of an adhesive site between the cover film and an adherend can be suppressed in a case where a laminate of the cover film and the adherend is stored for a long period of time.

As a result of intensive studies on the above-described object, the present inventors have found that the above-described object can be achieved by the following configurations.

[1] A cover film comprising:

a support; and
a polymer layer containing a polymer,
in which a surface haze of the cover film is 0.5% to 50%, and
a content of an ester compound satisfying the following requirement 1 in the support is 1% by mass or less with respect to a total mass of the support.
Requirement 1: a pKa of at least one hydrolyzate of the ester compound is 2.5 or less.

[2] The cover film according to [1],
in which a surface roughness Rz of a surface of the polymer layer on a side opposite to the support is 0.1 to 30 μm.
[3] The cover film according to [1] or [2],
in which an average length RSm of roughness profile elements of a surface of the polymer layer on a side opposite to the support is 5 to 500 μm.
[4] The cover film according to any one of [1] to [3],

in which an internal haze of the cover film is 1% or less.
[5] The cover film according to any one of [1] to [4],
in which the content of the ester compound is 0.6% by mass or less with respect to the total mass of the support.
[6] The cover film according to any one of [1] to [4],
in which the polymer layer contains a plasticizer.
[7] The cover film according to any one of [1] to [6],
in which the cover film is used for covering a test subject on a substrate.

According to the present invention, it is possible to provide a cover film including a support and a polymer layer, in which a mass reduction of the cover film can be suppressed and peeling of an adhesive site between the cover film and an adherend can be suppressed in a case where a laminate of the cover film and the adherend is stored for a long period of time.

## DESCRIPTION OF THE PREFERRED EMBODIMENTS

Hereinafter, the present invention will be described in detail.
Although configuration requirements related to embodiments of the present invention are described based on the representative embodiments of the present invention, the present invention is not limited to the embodiments.
In the present specification, the numerical ranges shown using "to" indicate ranges including the numerical values described before and after "to" as the minimum value and the maximum value.
In a range of numerical values described in stages in the present specification, the upper limit value or the lower limit value described in a certain range of numerical values may be replaced with an upper limit value or a lower limit value of the range of numerical values described in other stages. In addition, regarding the numerical range described in the present specification, an upper limit value or a lower limit value described in a numerical value may be replaced with a value described in Examples.
In the present specification, a combination of two or more preferred aspects is a more preferred aspect.
In the present specification, in a case where a plurality of substances corresponding to each component in a composition or in a layer is present, the amount of each component in the composition or in the layer means the total amount of the plurality of substances present in the composition, unless otherwise specified.
In the present specification, "(meth)acryl" is a generic term encompassing acryl and methacryl, and means "one or more of acryl and methacryl". Similarly, "(meth)acrylate" means "one or more of acrylate and methacrylate".
In the present specification, unless specified otherwise, a refractive index refers to a value which is measured using an Abbe refractometer ("NAR-2T", manufactured by Atago Co., Ltd.) with respect to light having a wavelength of 550 nm.
In the present specification, a weight-average molecular weight (Mw) and a number-average molecular weight (Mn) are molecular weights in terms of polystyrene used as a standard substance, which are detected by using a solvent tetrahydrofuran (THF), a differential refractometer, and a gel permeation chromatography (GPC) analyzer using TSKgel GMHxL, TSKgel G4000HxL, TSKgel G2000HxL, and/or TSKgel Super HZM-N (all trade names manufactured by Tosoh Corporation) as columns, unless otherwise specified.
In the present specification, an acid dissociation constant (pKa) represents a pKa in an aqueous solution, and is specifically a value determined by computation from a value based on a Hammett's substituent constant and database of publicly known literature values, using the following software package 1.
Software Package 1: Advanced Chemistry Development (ACD/Labs) Software V8.14 for Solaris (1994-2007 ACD/Labs)
On the other hand, the pKa can also be determined by a molecular orbital computation method. Examples of a specific method therefor include a method for performing calculation by computing $H^+$ dissociation free energy in an aqueous solution based on a thermodynamic cycle. With regard to a computation method for $H^+$ dissociation free energy, the $H^+$ dissociation free energy can be computed by, for example, density functional theory (DFT), but various other methods have been reported in literature and the like, and are not limited thereto. There are a plurality of software applications capable of performing DFT, and examples thereof include Gaussian 16.
As described above, the pKa in the present specification refers to a value determined by computation from a value based on a Hammett's substituent constant and database of publicly known literature values, using the software package 1, but in a case where the pKa cannot be calculated by the method, a value obtained by Gaussian 16 based on density functional theory (DFT) shall be adopted.
In addition, the pKa in the present specification refers to a "pKa in an aqueous solution" as described above, but in a case where the pKa in an aqueous solution cannot be calculated, a "pKa in a dimethyl sulfoxide (DMSO) solution" shall be adopted.

[Cover film]

The cover film according to the embodiment of the present invention includes a support and a polymer layer containing a polymer. In addition, a surface haze of the cover film according to the embodiment of the present invention is 0.5% to 50%, and a content of an ester compound satisfying the following requirement 1 in the support included in the cover film according to the embodiment of the present invention is 1% by mass or less with respect to the total mass of the support.

Requirement 1: an acid dissociation constant (pKa) of at least one hydrolyzate of the ester compound is 2.5 or less.

Hereinafter, the ester compound satisfying the requirement 1, in which the pKa of at least one hydrolyzate generated by hydrolysis is 2.5 or less, is also referred to as "specific ester compound".

In the cover film according to the embodiment of the present invention, detailed mechanism by which a mass reduction of the cover film can be suppressed and peeling of an adhesive site between the cover film and an adherend can be suppressed in a case where a laminate of the cover film and the adherend is stored for a long period of time is not necessarily clear, but the present inventors have presumed as follows.

First, since the content of the specific ester compound is equal to or less than a predetermined amount, generation of a compound having a low pKa, which contributes to decomposition of the support or the like included in the cover film even in a high humidity and high temperature environment, can be suppressed. In addition, since the surface haze of the cover film is within a predetermined range, adhesiveness of the adherend to a surface of the cover film is improved, and it is presumed that it is possible to produce a cover film in which the peeling of the adhesive site with the adherend during long-term storage can be suppressed.

In the present specification, "the effect of the present invention" means at least one of the effect of suppressing the mass reduction of the cover film or the effect of suppressing the peeling of the adhesive site between the cover film and the adherend in a case where the laminate of the cover film and the adherend is stored for a long period of time.

[Surface haze]

The surface haze of the cover film according to the embodiment of the present invention is 0.5% to 50%.

Since the surface haze of the cover film is 0.5% or more, an enclosing solution is likely to spread on a surface in a case where the cover film is adhered to the adherend using the enclosing solution, and the polymer of the polymer layer is more uniformly swollen and/or dissolved, so that the adhesiveness of the adherend to the surface of the cover film is improved. In addition, since the surface haze of the cover film is 50% or less, generation of air bubbles in the adhesive site between the cover film and the adherend is suppressed, and the peeling of the adhesive site after storage for a long period of time can be suppressed.

From the above-described viewpoints, the surface haze of the cover film is preferably 0.7% to 40%, more preferably 0.9% to 30%, and still more preferably 1.0% to 20%.

The surface haze of the cover film can be obtained by measuring the total haze and internal haze of the cover film using a haze meter (for example, "HGM-2DP", manufactured by Suga Test Instruments Co., Ltd.) according to JIS K-6714, and subtracting the internal haze from the total haze.

Details of the measuring method of the surface haze of the cover film will be described in Examples later.

Examples of a method of adjusting the surface haze of the cover film include a method of controlling a surface structure of the polymer layer on a side opposite to the support.

The surface structure of the polymer layer can be controlled, for example, by adjusting manufacturing conditions such as a viscosity of a coating liquid, heating conditions in a drying treatment, a thickness of a coating film, a surface tension gradient of the coating liquid, and drying conditions in a method of forming the polymer layer by applying the coating liquid containing the polymer onto a surface of the support and drying the coating film (which will be described later). As one of specific examples thereof, the surface structure of the polymer layer can be controlled by changing a gas concentration of a drying air in an initial stage of the coating film or changing at least one of a temperature of a roll or the number of rolls in a treatment of bringing into contact a heating roll placed on a surface of the support on a side opposite to a surface on which the coating layer has been formed.

In addition, examples of the method of controlling the surface structure of the polymer layer include a method of pressing an emboss roll having a surface with recesses and projections against the polymer layer or the coating film containing the polymer, which has been formed on the surface of the support, to transfer a shape of the recesses and projections to the polymer layer or the coating film.

The method of adjusting the surface haze of the cover film is not limited to the above-described methods.

Hereinafter, the configuration of the cover film will be described.

[Support]

In the support included in the cover film, as long as the content of the specific ester compound is 1% by mass or less with respect to the total mass of the support, a material constituting the support is not particularly limited, and all known materials can be used.
Examples of the material constituting the support include cellulose-based polymers such as triacetyl cellulose (TAC), diacetyl cellulose, cellulose acetate propionate, and cellulose acetate butyrate; polyester-based polymers such as an aliphatic polyester; polyolefin-based polymers such as a cycloolefin polymer (COP), polyethylene, and polypropylene; an acrylic resin; a polycarbonate (PC); and polystyrene. Among these, a cellulose-based polymer, an acrylic resin, or a cycloolefin polymer (COP) is preferable, and triacetyl cellulose (TAC) is more preferable.
In a case where the material constituting the support is a polymer, a weight-average molecular weight (Mw) thereof is, for example, 10,000 to 1,000,000, preferably 30,000 to 300,000.
In the support, the above-described material may be used alone or in combination of two or more kinds thereof.
A content of the above-described material in the support is preferably more than 50% by mass and more preferably 80% by mass or more with respect to the total mass of the support. The upper limit value thereof is not particularly limited, and in a case where the support does not contain the specific ester compound, the upper limit value thereof may be 100% by mass or less with respect to the total mass of the support, and in a case where the support contains the specific ester compound, the upper limit value thereof may be a remainder.

<Specific ester compound>

The support included in the cover film according to the embodiment of the present invention is characterized in that the content of the specific ester compound is 1% by mass or less with respect to the total mass of the support.
That is, the support does not contain the specific ester compound, or in a case of containing the specific ester compound, the support contains the specific ester compound in a content of 1% by mass or less with respect to the total mass of the support.
The specific ester compound is a compound in which a pKa of at least one hydrolyzate, that is, compound having an oxo acid of an organic acid or an inorganic acid and a hydroxy group, among ester compounds obtained by a condensation reaction of an oxo acid of an organic acid or an inorganic acid and a hydroxy group-containing compound, is 2.5 or less.
In a case where the ester compound has a plurality of pKa's, the ester compound satisfies the requirement 1 in a case where any one of the plurality of pKa's is 2.5 or less.
Examples of the specific ester compound include a phosphoric acid ester compound, a phosphorous acid ester compound, a sulfonic acid ester compound, and a nitric acid ester compound.
Examples of the hydrolyzate of the specific ester compound, having a pKa of 2.5 or less, include phosphoric acid produced by hydrolysis of a phosphoric acid ester compound, phosphorous acid produced by hydrolysis of a phosphorous acid ester compound, sulfonic acid such as methanesulfonic acid and benzenesulfonic acid, produced by hydrolysis of a sulfonic acid ester compound, and nitric acid produced by hydrolysis of a nitric acid ester compound.
Examples of the phosphoric acid ester compound include triphenyl phosphate, biphenyl diphenyl phosphate, bisphenol A bis-(diphenyl phosphate), trimethyl phosphate, triethyl phosphate, diphenyl-2-methacryloyl ethyl phosphate, tricresyl phosphate, trixylyl phosphate, and cresyl diphenyl phosphate.
Examples of the phosphorous acid ester compound include triphenyl phosphite, biphenyl diphenyl phosphite, bisphenol A bis-(diphenyl phosphite), trimethyl phosphite, triethyl phosphite, diphenyl-2-methacryloyl ethyl phosphite, tricresyl phosphite, trixylyl phosphite, and cresyl diphenyl phosphite.
Examples of the sulfonic acid ester compound include methyl benzenesulfonate, ethyl benzenesulfonate, methyl toluenesulfonate, and ethyl toluenesulfonate.
As the specific ester compound, from the viewpoint that a plasticizing effect in a case of being transferred to the polymer layer is more excellent, the phosphoric acid ester compound is preferable, triphenyl phosphate, biphenyl diphenyl phosphate, or tricresyl phosphate is more preferable, and triphenyl phosphate or biphenyl diphenyl phosphate is still more preferable.
In a case where the support contains the specific ester compound, the specific ester compound may be used alone or in combination of two or more kinds thereof. In a case where two or more kinds of the specific ester compounds are present, the total content of the specific ester compounds is 1% by mass or less with respect to the total mass of the support.
From the viewpoint that the effect of the present invention is more excellent, the content of the specific ester compound in a case where the support contains the specific ester compound is preferably 0.6% by mass or less and more preferably 0.4% by mass or less with respect to the total mass of the support. The support may not contain the specific ester compound, and the content of the specific ester compound in the support may be 0% by mass. It is

particularly preferable that the support does not contain the specific ester compound.

The content of the specific ester compound contained in the support can be measured by the following measuring method.

For example, the type and content of each ester compound contained in the support are measured by a known measuring method such as a gas chromatography-mass spectrometry (GC/MS) method. From the structural formula of the ester compound, the pKa of a hydrolyzate produced by hydrolysis of each ester compound contained in the support is determined by calculation. In a case where a hydrolyzate having a pKa of 2.5 or less is present, the content of the ester compound generated from the hydrolyzate (in a case where two or more kinds of ester compounds are present, the total content thereof) is defined as the content of the specific ester compound. In a case where no hydrolyzate having a pKa of 2.5 or less is present (that is, in a case of being equal to or less than the measurement limit), the support does not contain the specific ester compound.

<Second ester compound>

The support may contain a second ester compound other than the specific ester compound.

The second ester compound is not particularly limited as long as it is an ester compound in which the pKa of the hydrolyzate is all more than 2.5, and examples thereof include a carboxylic acid ester consisting of a carboxylic acid and a hydroxy group-containing compound.

Examples of the carboxylic acid ester compound include a sugar ester compound and a carboxylic acid ester oligomer of a dicarboxylic acid having two carboxy groups and a diol compound having two hydroxy groups (hereinafter, also referred to as "carboxylic acid oligomer A").

(Sugar ester compound)

The sugar ester compound is a compound in which hydrogen atoms in some or all of hydroxyl groups contained in saccharides are substituted with acyl groups.

Examples of the saccharides include monosaccharides, disaccharides, and polysaccharides, and disaccharides are preferable.

Examples of the monosaccharides include pentose such as ribose, deoxyribose, arabinose, and xylose; hexose such as glucose, galactose, and fructose; triose; tetrose; and heptose.

Examples of the disaccharides include sucrose, lactose, maltose, trehalose, turanose, and cellobiose, and sucrose is preferable.

Examples of the polysaccharides include glycogen and starch.

The saccharides may have any of a chain and a cyclic structure. Examples of the cyclic structure of the saccharides include a furanose ring and a pyranose ring.

Examples of the above-described acyl group include aliphatic acyl groups such as a formyl group, an acetyl group, a propionyl group, a 2-methylpropionyl group, a 2,2-dimethylpropionyl group, and a 2-ethylhexanoyl group; and aromatic acyl groups such as a benzoyl group, a 1-naphthylcarbonyl group, a 2-naphthylcarbonyl group, and a 2-furylcarbonyl group.

The number of carbon atoms in the above-described acyl group is preferably 1 to 10.

As the sugar ester compound, sugar ester compounds represented by General Formulae (I) to (III) are also preferable.

(I) $(HO)m\text{-}G\text{-}(L\text{-}R^1)n$

(II) $(HO)p\text{-}G\text{-}(L\text{-}R^1)q$

(III) $(HO)t\text{-}G'\text{-}(L'\text{-}R^2)r$

(in General Formulae (I) to (III), G and G' each independently represent a monosaccharide residue or a disaccharide residue; $R^1$'s each independently represent an aliphatic group or an aromatic group, where at least one of $R^1$'s represents an aromatic group; $R^2$'s each independently represent an aliphatic group; L and L' each independently represent a divalent linking group; and m represents an integer of 0 or more, n, p, and q each independently represent an integer of 1 or more, r represents an integer of 3 or more, and t represents an integer of 0 or more; provided that $m + n \geq 4$, $p + q \geq 4$, $m > p$, and $n < q$; in addition, m + n and p + q are each equal to the number of hydroxyl groups in a case where it is assumed that G is, instead of a residue, a cyclic acetal structure having the same skeleton as unsubstituted saccharides, and r + t is equal to the number of hydroxyl groups in a case where it is assumed that G' is, instead of a residue, a cyclic acetal structure having the same skeleton as unsubstituted saccharides)

As the sugar ester compound, it is more preferable to use a sugar ester compound mixture obtained by mixing an aromatic sugar ester compound represented by General Formula (I) described above, an ester compound which is represented by General (II) described above and is different from the aromatic sugar ester compound represented by General Formula (I) described above, and an aliphatic sugar ester compound represented by General Formula (III) described above.

Hereinafter, preferred ranges common to each of the sugar ester compounds and preferred ranges specific to each of the sugar ester compounds satisfying General Formulae (I) to (III) will be described.

Each of the sugar ester compounds used in the above-described sugar ester compound mixture has a monosaccharide residue or a disaccharide residue as a skeleton. That is, in General Formulae (I) to (III) described above, G and G' each independently represent a monosaccharide residue or a disaccharide residue.

The above-described sugar ester compound refers to a compound in which at least one substitutable group (for example, a hydroxyl group and a carboxyl group) in a sugar skeleton structure of the compound is ester-bonded with at least one substituent. That is, the sugar ester compound mentioned herein includes broad-sense sugar derivatives, and also includes compounds containing a sugar residue as a structure, such as a gluconic acid. That is, the above-described sugar ester compound includes an ester of glucose and a carboxylic acid and an ester of a gluconic acid and an alcohol.

The above-described sugar ester compound preferably has a furanose structure or a pyranose structure. In a case of having a furanose structure or a pyranose structure as a sugar skeleton, it is required that, General Formulae (I) to (III) described above, the conditions that $m + n \geq 4$, $p + q \geq 4$, and r is 3 or more are satisfied.

In addition, in a case of having a furanose structure or a pyranose structure as a sugar skeleton, it is required that the conditions that m + n and p + q are each equal to the number of hydroxyl groups in a case where it is assumed that G is, instead of a residue, a cyclic acetal structure having the same skeleton as unsubstituted saccharides, and r + t is equal to the number of hydroxyl groups in a case where it is assumed that G' is, instead of a residue, a cyclic acetal structure having the same skeleton as unsubstituted saccharides are also satisfied.

The upper limit values of m + n, p + q, and r + t can adopt values determined by the type of G or G' described above, and are 5 in a case where G or G' is a monosaccharide residue and 8 in a case where G or G' is a disaccharide residue.

As the above-described sugar ester compounds represented by General Formulae (I) to (III), an esterified compound obtained by esterifying all or some of OH groups in a compound (A) having one of a furanose structure or a pyranose structure, in which G or G' described above is a monosaccharide residue, or an esterified compound obtained by esterifying all or some of OH groups in a compound (B) having two of at least one of a furanose structure or a pyranose structure bonded to each other, in which G or G' described above is a disaccharide residue is preferable.

Examples of the compound (A) include glucose, galactose, mannose, fructose, xylose, and arabinose, but the compound (A) is not limited thereto.

Examples of the compound (B) include lactose, sucrose, nystose, 1F-fructosylnystose, stachyose, maltitol, lactitol, lactulose, cellobiose, maltose, cellotriose, maltotriose, raffinose, and kestose. In addition, examples thereof also include gentiobiose, gentiotriose, gentiotetraose, xylotriose, and galactosyl sucrose, but the compound (B) is not limited thereto.

Among these compound (A) and compound (B), a compound having both the furanose structure and the pyranose structure is preferable. For example, sucrose, kestose, nystose, 1F-fructosylnystose, or stachyose is preferable, and sucrose is more preferable. In addition, in the compound (B), a compound in which two of at least one of the furanose structure or the pyranose structure are bonded to each other is also a preferred aspect.

The substituent used for esterifying all or some of the OH groups in the compound (A) and the compound (B) is not particularly limited. Among these, it is preferable to use a monocarboxylic acid. That is, it is preferable that $R^1$ in General Formula (I) and General Formula (II) described above and $R^2$ in General Formula (III) described above each independently represent an acyl group.

The above-described monocarboxylic acid is not particularly limited, and known aliphatic monocarboxylic acids, alicyclic monocarboxylic acids, aromatic monocarboxylic acids, and the like can be used. One kind of carboxylic acid may be used, or a mixture of two or more kinds thereof may be used. In a case of a plurality of $R^1$'s or a plurality of $R^2$'s, the plurality of $R^1$'s or the plurality of $R^2$'s may be the same or different from each other.

On the other hand, it is preferable that L in General Formula (I) and General Formula (II) described above and L' in General Formula (III) described above each independently represent a single bond, -O-, -CO-, or $-NR^{11}-$ ($R^{11}$ represents a monovalent substituent), and in a case of a plurality of $L^1$'s or a plurality of L's, they may be the same or different from each other. Among these, from the viewpoint that the above-described $L^1$ or L' can be easily substituted with an acyl group as $R^1$ and $R^2$, it is preferable that $L^1$ or L' represents -O-.

Next, preferred aspects of the aromatic sugar ester compound represented by each of General Formulae (I) and (II) will be described.

In General Formulae (I) and (II), $R^1$'s each independently represent an aliphatic group or an aromatic group,

where at least one of $R^1$'s represents an aromatic group. Among these, it is preferable that $R^1$'s each independently represent only an aromatic group and more preferable that $R^1$'s each independently represent the same aromatic group.

In addition, in General Formulae (I) and (II), m represents an integer of 0 or more, and n, p, and q each independently represent an integer of 1 or more, where $m > p$ and $n < q$.

In the aromatic sugar ester compound represented by General Formula (I) and the aromatic sugar ester compound represented by General Formula (II), in a case where G is a disaccharide residue, n is preferably 3 or more and more preferably 5 or more.

Examples of the aromatic monocarboxylic acid preferably used in a case of being substituted with $R^1$ include aromatic monocarboxylic acids such as a benzoic acid and a toluic acid, in which an alkyl group or an alkoxy group is introduced to a benzene ring of a benzoic acid; aromatic monocarboxylic acids such as a cinnamic acid, a benzilic acid, a biphenylcarboxylic acid, a naphthalenecarboxylic acid, and a tetralincarboxylic acid, which have two or more benzene rings; and derivatives thereof.

Next, preferred aspects of the aliphatic sugar ester compound represented by General Formula (III) will be described. In General Formula (III), $R^2$'s each independently represent an aliphatic group.

Examples of the aliphatic monocarboxylic acid preferably used in a case of being substituted with $R^2$ include saturated fatty acids such as an acetic acid, a propionic acid, a butyric acid, an isobutyric acid, a valeric acid, a caproic acid, an enanthic acid, a caprylic acid, a pelargonic acid, a capric acid, a 2-ethyl-hexanecarboxylic acid, an undecylic acid, a lauric acid, a tridecylic acid, a myristic acid, a pentadecylic acid, a palmitic acid, a heptadecylic acid, a stearic acid, a nonadecanoic acid, an arachic acid, a behenic acid, a lignoceric acid, a cerotic acid, a heptacosanoic acid, a montanoic acid, a melissic acid, and a lacceric acid; and unsaturated fatty acids such as an undecylenic acid, an oleic acid, a sorbic acid, a linoleic acid, a linolenic acid, an arachidonic acid, and an octenoic acid.

Preferred examples of the alicyclic monocarboxylic acid include cyclopentanecarboxylic acid, cyclohexanecarboxylic acid, cyclooctanecarboxylic acid, and a derivative thereof.

It is preferable that $R^2$'s each independently represent a non-cyclic aliphatic group, and it is more preferable that all $R^2$'s represent a non-cyclic aliphatic group.

It is preferable that $R^2$ represents two or more kinds of aliphatic groups.

Among the aliphatic monocarboxylic acids, the aliphatic sugar ester compound represented by General Formula (III) is preferably substituted with at least acetic acid. That is, it is preferable that at least one of $R^2$'s in General Formula (III) represents an acetyl group.

On the other hand, it is more preferable that at least one of $R^2$'s represents a branched aliphatic group, and it is particularly preferable that, in a case where $R^2$'s represent two or more kinds of aliphatic groups, only one of the aliphatic groups is a branched aliphatic group. Among these, it is preferable that the aliphatic sugar ester compound represented by General Formula (III) is substituted with isobutyric acid in addition to the acetic acid. That is, it is preferable that $R^2$ in General Formula (III) includes an acetyl group and an isobutyl group.

From the viewpoint of improving planar failure of the obtained cellulose ester film, it is preferable that G' in General Formula (III) represents a disaccharide residue.

A method of producing these aliphatic sugar ester compounds substituted with the aliphatic monocarboxylic acid is described in, for example, JP1996-245678A (JP-H8-245678A).

In a case where a combination of the sugar ester compounds represented by General Formulae (I) to (III) is used as the sugar ester compound, a mixing proportion thereof is not particularly limited, but the total content of the aromatic sugar ester compounds/content of the aliphatic ester compound (mass ratio) is preferably more than 1, more preferably 2 to 10, and still more preferably 3 to 5.

In addition, in a case where a combination of the sugar ester compounds represented by General Formulae (I) to (III) is used as the sugar ester compound, the total content of the sugar ester compounds represented by General Formulae (I) to (III) is preferably 1% to 30% by mass, more preferably 5% to 30% by mass, still more preferably 5% to 20% by mass, and particularly preferably 5% to 15% by mass with respect to cellulose ester.

With regard to the sugar ester compounds represented by General Formulae (I) to (III), reference can also be made to the description in paragraphs [0015] to [0056] of JP2012-031313A, the description of which is incorporated herein by reference.

(Oligomer A)

The oligomer A is not particularly limited as long as it is a compound obtained by condensing a dicarboxylic acid and a diol compound, and examples thereof include a compound having a repeating unit represented by General Formula (1).

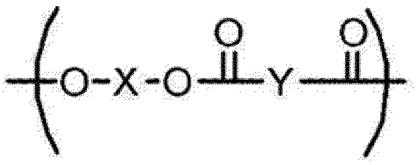

(1)

In General Formula (1), X and Y represent a divalent linking group.

Examples of X include an alkylene group having 2 to 20 carbon atoms, a polyoxyalkylene group, an alkenylene group, a phenylene group, a naphthylene group, and a divalent heterocyclic aromatic group, each of which may have a substituent. The alkylene group in the alkylene group, alkenylene group, and polyoxyalkylene group described above may have an alicyclic structure.

Examples of Y include an alkylene group having 2 to 20 carbon atoms, a polyoxyalkylene group, an alkenylene group, a phenylene group, a naphthylene group, and a divalent heterocyclic aromatic group, each of which may have a substituent. The alkylene group in the alkylene group, alkenylene group, and polyoxyalkylene group described above may have an alicyclic structure.

The divalent linking group represented by X and Y may include an atom other than a carbon atom, such as an oxygen atom and a nitrogen atom.

In addition, in a case where the oligomer A has a plurality of repeating units represented by General Formula (1), X's and Y's may be the same or different from each other.

In the repeating unit represented by General Formula (1), it is preferable that X represents a non-cyclic divalent linking group having 2 to 10 carbon atoms, and Y represents a divalent linking group having 3 to 12 carbon atoms including an alicyclic structure of a 3- to 6-membered ring. The above-described alicyclic structure is more preferably a 5-membered ring or a 6-membered ring.

As the oligomer A, a compound including a repeating unit represented by General Formula (1A) and having a sealed terminal is preferable.

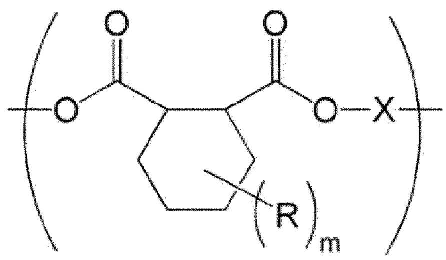

(1 A)

In General Formula (1A), X represents a non-cyclic divalent linking group having 2 to 10 carbon atoms. R represents an alkyl group having 1 to 8 carbon atoms, an alkenyl group having 2 to 8 carbon atoms, an alkynyl group having 2 to 8 carbon atoms, or an aryl group having 6 carbon atoms. m represents an integer of 0 to 4.

X represents a non-cyclic divalent linking group having 2 to 10 carbon atoms.

X is preferably a non-cyclic divalent linking group having 2 to 6 carbon atoms and more preferably a non-cyclic divalent linking group having 2 to 4 carbon atoms.

Examples of the non-cyclic divalent linking group having 2 to 10 carbon atoms include an alkylene group (preferably having 2 to 10 carbon atoms, more preferably having 2 to 6 carbon atoms, and still more preferably having 2 to 4 carbon atoms), an alkynylene group (preferably having 2 to 10 carbon atoms, more preferably having 2 to 6 carbon atoms, and still more preferably having 2 to 4 carbon atoms), and the above-described alkylene group and the above-described alkynylene group, each of which has a heteroatom (for example, an oxygen atom or a nitrogen atom).

The non-cyclic divalent linking group having 2 to 10 carbon atoms may have a substituent.

Examples of the substituent include an alkyl group, an alkoxy group, a hydroxyl group, a carboxyl group, and a group formed by a combination thereof. The term "non-cyclic" means that the group does not include a cyclic structure. Examples of the group not including a cyclic structure include a linear or branched group.

R represents an alkyl group having 1 to 8 carbon atoms, an alkenyl group having 2 to 8 carbon atoms, an alkynyl group having 2 to 8 carbon atoms, or an aryl group having 6 carbon atoms.

Examples of the alkyl group having 1 to 8 carbon atoms include a methyl group, an ethyl group, a propyl group, a butyl group, an isobutyl group, a pentyl group, a hexyl group, an octyl group, and a 2-ethylhexyl group, and an alkyl group having 1 to 4 is preferable and a methyl group or an ethyl group is more preferable.

Examples of the alkenyl group having 2 to 8 carbon atoms include an ethenyl group, a 1-methylethenyl group, a 1-propenyl group, a 2-propenyl group, a 2-methyl-1-propenyl group, a 2-methyl-2-propenyl group, and a 2-methylenebutyl group.

Examples of the alkynyl group having 2 to 8 carbon atoms include an ethynyl group, a 1-methylethynyl group, a 1-propyne group, a 2-propyne group, a 2-methyl-1-propyne group, a 2-methyl-2-propyne group, and a 2-methylenebutyne group.

Examples of the aryl group having 6 carbon atoms include a phenyl group and a 4-methylphenyl group.

The group represented by R may have a substituent. Examples of the above-described substituent include the substituents that can be included in X.

The number of carbon atoms in the group represented by R does not include the number of carbon atoms in the substituent that can be included in the group represented by R. Specifically, the aryl group having 6 carbon atoms includes a phenyl group and a 4-methylphenyl group.

R may form a ring structure. Examples of the above-described ring structure include a cyclohexyl group, a cyclooctyl group, a boronyl group, an isoboronyl group, and a norbornyl group.

m represents an integer of 0 to 4. m is preferably an integer of 1 to 4, more preferably an integer of 1 or 2, and still more preferably 1.

In addition, the number of repeating units represented by General Formula (1A) is, for example, an integer of 2 to 60, preferably an integer of 3 to 20 and more preferably an integer of 4 to 10.

The compound including the above-described repeating unit represented by General Formula (1A) preferably has a terminal structure derived from a monohydric alcohol or a monocarboxylic acid by sealing the terminal. For example, in a case where a diester compound and a diol compound are reacted to obtain an ester oligomer having a carboxy group at a terminal, the terminal can be sealed with a monohydric alcohol residue by reacting the ester oligomer with a monohydric alcohol. Similarly, in a case where an ester oligomer having a hydroxyl group at a terminal is obtained, the terminal can be sealed with a monocarboxylic acid residue by reacting the ester oligomer with a monocarboxylic acid.

The residue is a partial structure of the oligomer A, and represents a partial structure having characteristics of a monomer which forms the above-described terminal structure. For example, a monocarboxylic acid residue formed from a monocarboxylic acid R-COOH is R-CO-, and a monohydric alcohol residue formed from a monohydric alcohol R-OH is R-O-.

The compound including the above-described repeating unit represented by General Formula (1A) preferably has a terminal sealed with an acyl group, and more preferably has a terminal structure derived from a monocarboxylic acid. In this case, the terminal structure sealed by the acyl group may be linear or branched, and may have an alicyclic structure. The above-described acyl group is preferably a linear or branched aliphatic acyl group having 2 to 4 carbon atoms or an alicyclic acyl group having 4 to 12 carbon atoms, more preferably a linear or branched aliphatic acyl group having 2 or 3 carbon atoms or an alicyclic acyl group having 4 to 7 carbon atoms, and still more preferably a linear or branched aliphatic acyl group having 2 carbon atoms or an alicyclic acyl group having 7 carbon atoms.

Examples of the compound including the above-described repeating unit represented by General Formula (1A) include those described in paragraphs [0024] to [0035] of JP2015-227955A, the contents of which are incorporated herein by reference.

A number-average molecular weight (Mw) of the oligomer A is preferably 500 to 10,000, more preferably 700 to 3,000, and still more preferably 800 to 1,500.

The support may contain a second ester compound other than the above-described sugar ester compound and the above-described oligomer A.

Examples of the second ester compound other than the sugar ester compound and the oligomer A include adipic acid diesters such as dioctyl adipate, dibutyl adipate, and diisobutyl adipate; sebacic acid diesters such as dioctyl sebacate; phthalic acid diesters such as dimethyl phthalate, diethyl phthalate, dibutyl phthalate, dipentyl phthalate, dihexyl phthalate, and dicyclohexyl phthalate; tris(2-ethylhexyl) trimellitate; dibutyl maleate; and glycerin triacetate.

In a case where the support contains the second ester compound, the second ester compound may be used alone or in combination of two or more kinds thereof.

In a case where the support contains the second ester compound, a content of the second ester compound is preferably 1% to 30% by mass and more preferably 5% to 15% by mass with respect to the total mass of the support.

The content of the second ester compound can be measured according to the method described as the method of measuring the content of the specific ester compound.

<Properties of support>

A thickness of the support is not particularly limited, but is preferably 50 to 250 μm, more preferably 50 to 150 μm, and still more preferably 100 to 150 μm.

In addition, a refractive index of the support is not particularly limited, and may be, for example, 1.440 to 1.600.

From the viewpoint of visibility in a case where the support is laminated with a substrate, the refractive index of the support is preferably 1.460 to 1.560 that is close to that of a glass slide (refractive index: 1.52 to 1.56).

A surface treatment such as ultraviolet irradiation, corona discharge, or glow discharge may be performed on the support.

[Polymer layer]

The cover film includes a polymer layer containing a polymer.

<Polymer>

The polymer constituting the polymer layer is not particularly limited, and it is preferable that the polymer is swollen with an organic solvent used for an automatic enclosing device and more preferably dissolved in the organic solvent. Examples of the organic solvent used in the automatic enclosing device include any single solvent of xylene, toluene, mesitylene (1,3,5-trimethylbenzene), pseudocumene (1,2,4-trimethylbenzene), hemimellitene (1,2,3-trimethylbenzene), durene (1,2,4,5-tetramethylbenzene), 3-methylbutyl acetate, anisole, ethyl propionate, amyl acetate, propyl acetate, isopropyl acetate, butyl acetate, methyl lactate, dimethyl carbonate, 1-butanol, 1-propanol, 2-butanol, 1-pentanol, 2-pentanol, isoamyl alcohol, t-amyl alcohol, neopentyl alcohol, cyclopentanol, 2-hexanol, 4-methyl-2-pentanol, methyl isobutyl ketone, acetylacetone, cyclopentanone, n-butyl ether, 1,2-dimethoxyethane, dioxane, cyclopentyl methyl ether, 1-methoxy-2-propanol, 2-methoxy-1-methylethyl acetate, ethyl acetate, methyl acetate, acetone, and methyl ethyl ketone, and a mixed solvent of two or more thereof. In a case where the polymer is swollen with the organic solvent or is dissolved in the organic solvent, the cover film and the substrate are bonded to each other (an adhesive site is formed), and the test subject can be enclosed.

From the viewpoint of excellent solubility in the above-described organic solvent, the polymer is preferably an acrylic resin.

In the present specification, the acrylic resin refers to a polymer which has a repeating unit derived from an acrylate monomer and/or a methacrylate monomer.

The acrylic resin is not particularly limited as long as it has the repeating unit derived from an acrylate monomer and/or a methacrylate monomer, and may be a homopolymer of one monomer selected from the group consisting of an acrylate monomer and a methacrylate monomer or may be a copolymer of two or more monomers selected from the group consisting of an acrylate monomer and a methacrylate monomer. In addition, the acrylic resin may be a copolymer of one or more monomers selected from the group consisting of an acrylate monomer and a methacrylate monomer and one or more monomers other than the acrylate monomer and the methacrylate monomer (for example, an acrylamide monomer such as dimethylacrylamide or isopropylacrylamide, or a vinyl monomer such as styrene).

In the acrylic resin, a content of the repeating unit derived from an acrylate monomer and/or a methacrylate monomer is preferably 50% by mass or more, more preferably 70% by mass or more, and still more preferably 90% by mass or more with respect to all repeating units of the acrylic resin. The upper limit of the content of the repeating unit derived from an acrylate monomer and/or a methacrylate monomer is not particularly limited, and may be 100% by mass with respect to all repeating units of the acrylic resin.

It is particularly preferable that the acrylic resin includes only the repeating unit derived from an acrylate monomer and/or a methacrylate monomer.

The acrylic resin can be prepared by a known method, and can be prepared, for example, by polymerizing one or more monomers selected from the group consisting of an acrylate monomer and a methacrylate monomer.

Examples of the acrylate monomer and the methacrylate monomer described above include an alkyl acrylate and an alkyl methacrylate.

The alkyl group in the alkyl acrylate and the alkyl methacrylate may further have a substituent. Examples of the above-described substituent include an aryl group, and a phenyl group is preferable. The number of carbon atoms in the alkyl group in the alkyl acrylate and the alkyl methacrylate, which may have a substituent, is preferably 1 to 15, more preferably 1 to 8, still more preferably 1 to 5, and particularly preferably 1 to 3.

Specific examples of the above-described alkyl acrylate monomer include methyl acrylate, ethyl acrylate, n-propyl acrylate, i-propyl acrylate, n-butyl acrylate, i-butyl acrylate, t-butyl acrylate, 2-ethylhexyl acrylate, cyclohexyl acrylate, lauryl acrylate, phenyl acrylate, benzyl acrylate, 2-methoxyethyl methacrylate, hydroxyethyl acrylate, and acetoacetoxyalkyl acrylate.

Specific examples of the above-described alkyl methacrylate monomer include methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, cyclohexyl methacrylate, phenyl methacrylate, benzyl methacrylate, lauryl methacrylate, 2-methoxyethyl methacrylate, hydroxyethyl methacrylate, and acetoacetoxyalkyl methacrylate.

Examples of the polymer include polymers including a repeating unit derived from one or more monomers

selected from the group consisting of alkyl acrylate, alkyl methacrylate, styrene, and acrylamide.

The alkyl acrylate and the alkyl methacrylate described above have the same definitions as described above.

Among these, the polymer preferably includes a repeating unit derived from one or more monomers selected from the group consisting of ethyl acrylate, n-butyl acrylate, methyl methacrylate, ethyl methacrylate, n-butyl methacrylate, i-butyl methacrylate, t-butyl methacrylate, 2-ethylhexyl methacrylate, cyclohexyl methacrylate, benzyl methacrylate, lauryl methacrylate, 2-methoxyethyl methacrylate, acetoacetoxyalkyl methacrylate, styrene, and dimethylacrylamide; more preferably includes a repeating unit derived from one or more monomers selected from the group consisting of ethyl acrylate, methyl methacrylate, ethyl methacrylate, n-butyl methacrylate, i-butyl methacrylate, t-butyl methacrylate, 2-ethylhexyl methacrylate, benzyl methacrylate, lauryl methacrylate, and 2-methoxyethyl methacrylate; and still more preferably includes a repeating unit derived from one or more monomers selected from the group consisting of ethyl acrylate and ethyl methacrylate.

As the polymer constituting the polymer layer, from the viewpoint that chips during cutting can be further suppressed, an acrylic resin consisting of a combination of a repeating unit derived from the above-described alkyl acrylate and a repeating unit derived from the above-described alkyl methacrylate is preferable. In such an acrylic resin, each of a content of the repeating unit derived from the alkyl acrylate and a content of the repeating unit derived from the alkyl methacrylate is preferably 20% to 80% by mass and more preferably 30% to 70% by mass with respect to all repeating units of the acrylic resin.

A weight-average molecular weight (Mw) of the polymer is preferably 10,000 to 500,000, more preferably 50,000 to 140,000, and still more preferably 60,000 to 120,000.

In a case where the cover film according to the embodiment of the present invention is used as a cover film of a dyed specimen, a dyeing coloring agent may spread in the polymer layer, which may deteriorate observability. In order to prevent this aspect, it is also preferable to reduce compatibility of the polymer with the coloring agent for dyeing.

The compatibility between the polymer and the coloring agent for dyeing (for example, eosin) can be determined from a Hansen solubility parameter distance, and for example, the Hansen solubility parameter distance between the polymer and the coloring agent for dyeing is preferably 12.00 $MPa^{0.5}$ or more, more preferably 12.50 $MPa^{0.5}$ or more, and still more preferably 13.00 $MPa^{0.5}$ or more. The upper limit of the Hansen solubility parameter distance is not limited, and for example, the Hansen solubility parameter distance is 40.00 $MPa^{0.5}$ or less.

Each Hansen solubility parameter can be calculated with the Y-MB method using Hansen Solubility Parameter in Practice (HSPiP, ver 5).

A content of the polymer in the polymer layer is not particularly limited, but is preferably 85% by mass or more and more preferably 90% by mass or more with respect to the total mass of the polymer layer. The upper limit thereof may be 100% by mass or less, and is preferably 99.99% by mass or less and more preferably 99.95% by mass or less.

<Additive>

The polymer layer may contain an additive other than the above-described polymer.

Examples of the additive which may be contained in the polymer layer include silane coupling agents, a thickener such as inorganic particles, and a plasticizer, which will be described below.

(Silane coupling agents)

The polymer layer may contain at least one selected from the group consisting of a silane coupling agent, a hydrolyzate thereof, and a hydrolysis condensate thereof (hereinafter, these are also collectively referred to as "silane coupling agents").

From the viewpoint that blocking is less likely to occur between the polymer layer and a back surface of the support (surface of the support on a side opposite to the surface on which the polymer layer is formed) even in a case where the cover film according to the embodiment of the present invention is stored in a roll shape, and that storability for a long period of time is more excellent, it is preferable that the polymer layer contains the silane coupling agents.

The type of the silane coupling agent is not particularly limited, but a silane coupling agent which has two or more different reactive groups in a molecule, in which at least one of the reactive groups is a reactive group which is chemically bonded to an inorganic substance and at least one of the reactive groups is a reactive group which is chemically bonded to an organic material, is preferable.

Examples of the silane coupling agent include a silane coupling agent represented by the following general formula.

$$X\text{-}Si(R^1)_3$$

X represents a group having a reactive group. Examples of the reactive group include a vinyl group, an epoxy

group, an amino group, a (meth)acryloyl group, and a mercapto group. More specifically, X can be a group represented by $R^2$-L-. $R^2$ represents a reactive group, and L represents a divalent linking group (preferably, alkylene which may include a heteroatom (for example, an oxygen atom)).

$R^1$ represents a hydrolyzable group. The hydrolyzable group is a group which is directly linked to a silicon atom (Si) and can cause a hydrolysis reaction and/or a condensation reaction. Examples of the hydrolyzable group include an alkoxy group, a halogen atom, an acyloxy group, an alkenyloxy group, and an isocyanate group.

As the silane coupling agent, for example, one or more selected from the group consisting of vinyltrichlorosilane, vinyltris(β-methoxyethoxy)silane, vinyltriethoxysilane, vinyl trimethoxysilane, γ-(methacryloxypropyl)trimethoxy silane, β-(3,4-epoxycyclohexyl)ethyltrimethoxysilane, γ-glycidoxypropyltrimethoxysilane, γ-glycidoxypropylmethyldiethoxysilane, N-β-(aminoethyl)-γ-aminopropyltrimethoxysilane, N-β-(aminoethyl)-γ-aminopropyl methyldimethoxysilane, γ-aminopropyl triethoxysilane, N-phenyl-γ-aminopropyltrimethoxysilane, γ-mercaptopropyl trimethoxysilane, and γ-chloropropyl trimethoxysilane are preferable; one or more selected from the group consisting of γ-glycidoxypropyltrimethoxysilane, N-β-(aminoethyl)-γ-aminopropyltrimethoxysilane, and γ-aminopropyl triethoxysilane are more preferable; one or more selected from the group consisting of γ-glycidoxypropyltrimethoxysilane and N-β-(aminoethyl)-γ-aminopropyltrimethoxysilane are still more preferable; and γ-glycidoxypropyltrimethoxysilane is particularly preferable.

The hydrolyzate of the silane coupling agent is intended to be a compound obtained by hydrolyzing the hydrolyzable group in the silane coupling agent. The above-described hydrolyzate may be a compound in which all of the hydrolyzable groups are hydrolyzed (completely hydrolyzed product) or a compound in which some of the hydrolyzable groups are hydrolyzed (partially hydrolyzed product). That is, the above-described hydrolyzate may be the completely hydrolyzed product, the partially hydrolyzed product, or a mixture thereof.

In addition, the hydrolysis condensate of the silane coupling agent is intended to be a compound obtained by hydrolyzing the hydrolyzable group in the silane coupling agent and condensing the obtained hydrolyzate. The above-described hydrolysis condensate may be a compound in which all of the hydrolyzable groups are hydrolyzed and all of the hydrolyzates are condensed (completely hydrolyzed and condensed product) or a compound in which some of the hydrolyzable groups are hydrolyzed and some of the hydrolyzates are condensed (partially hydrolyzed and condensed product). That is, the above-described hydrolysis condensate may be the completely hydrolyzed and condensed product, the partially hydrolyzed and condensed product, or a mixture thereof.

It can be easily understood by those skilled in the art that the type of the silane coupling agent used in the polymer layer is selected depending on the type of an organic material to be bonded to glass, that is, the type of the polymer constituting the polymer layer.

A content of the silane coupling agents in the polymer layer is preferably 0.1 $mg/m^2$ or more and more preferably 5 to 25 $mg/m^2$ per unit area of the polymer layer.

The silane coupling agent may be used alone or in combination of two or more kinds thereof.

The silane coupling agents in the polymer layer may be homogeneously present in the entire polymer layer, or may be unevenly distributed on a surface of any main surface of the polymer layer. In a case where the silane coupling agents are unevenly distributed on a surface of any main surface of the polymer layer, the surface may be a surface of the polymer layer on a side facing the support or may be a surface of the polymer layer on a side opposite to the support.

(Thickener)

The polymer layer may contain a thickener. The type of the thickener contained in the polymer layer is not particularly limited, and examples thereof include polysaccharides, celluloses, polymer compounds such as acrylic, polyvinyl alcohol, diol, and terpene, inorganic particles such as silica particles and titania particles, and organic particles consisting of a polymer such as PMMA, and cellulose acetate (more preferably cellulose acetate butyrate or cellulose acetate phthalate) or silica particles are preferable.

From the viewpoint of suppressing bleed out (migration) of a hydrophilic material from a member in contact with the polymer layer, it is preferable that a surface of the inorganic particles is treated to be hydrophobic.

Sizes of the inorganic particles and the organic particles are not particularly limited, but in a case where the sizes are excessively large, scattering is likely to occur and visibility may be deteriorated, so that average secondary particle diameters of the inorganic particles and the organic particles (average particle diameter of aggregates of the inorganic particles and the organic particles) are preferably 1 μm or less. The lower limit value thereof is not particularly limited, and may be 1 nm or more. The average secondary particle diameters of the inorganic particles and the organic particles can be measured based on a dynamic light scattering method using a particle diameter measuring device ("nanoSAQLA" manufactured by Otsuka Electronics Co., Ltd.).

In addition, from the viewpoint of preventing the scattering, it is preferable that refractive indices of the inorganic particles and the organic particles are close to the refractive index of the polymer layer. More specifically, the refractive indices of the inorganic particles and the organic particles are preferably 1.40 to 1.60.

(Plasticizer)

The polymer layer may contain a plasticizer. In a case where the polymer layer contains a plasticizer, the compatibility of the polymer layer with the solvent (xylene or the like) can be assisted, a dissolution rate of the polymer layer in a case where the polymer layer is in contact with the solvent can be increased, and brittleness of the polymer layer can be improved.
The plasticizer which may be contained in the polymer layer is not particularly limited, and examples thereof include plasticizers selected from the group consisting of phosphates such as triphenyl phosphate, bisphenol A bis-(diphenyl phosphate), trimethyl phosphate, triethyl phosphate, and diphenyl-2-methacryloylethyl phosphate; adipic acid esters such as dioctyl adipate, dibutyl adipate, and diisobutyl adipate; sebacic acid esters such as dioctyl sebacate; phthalic acid esters such as diethyl phthalate, di(2-ethylhexyl) phthalate, dioctyl phthalate, dinonyl phthalate, didecyl phthalate, and diundecyl phthalate; tris(2-ethylhexyl) trimellitate; dibutyl maleate; and glycerin triacetate.
In a case where the polymer layer contains the above-described additives, a content of each of the additives is not particularly limited, and from the viewpoint of further exhibiting the effect of each of the additives, it is preferably 0.5% or more, more preferably 1% or more, and still more preferably 3% or more with respect to the total mass of the polymer.
The upper limit of the content of the above-described additive is not particularly limited, but from the viewpoint of adhesiveness of the polymer layer, it is preferably 20% or less, more preferably 15% or less, and still more preferably 10% or less with respect to the total mass of the polymer.

<Properties of polymer layer>

(Thickness)

A thickness of the polymer layer is not particularly limited, and from the viewpoint of further improving the adhesiveness to the glass slide, it is preferably 1 μm or more and more preferably 10 μm or more. In addition, from the viewpoint of further improving handleability of the cover film, the thickness of the polymer layer is preferably 40 μm or less and more preferably 30 μm or less.

(Surface structure)

From the viewpoint that the effect of the present invention is more excellent, a surface roughness Rz of a surface of the polymer layer on a side opposite to the surface facing the support (hereinafter, also simply referred to as "surface of the polymer layer") is preferably 0.1 to 50 μm, more preferably 0.1 to 30 μm, and still more preferably 0.5 to 10 μm.
In the present specification, the surface roughness Rz of the surface of the polymer layer means a maximum height Rz of the surface specified in JIS B0601: 2013.
In addition, from the viewpoint that an enclosing solution is likely to spread on the surface in a case where the cover film is adhered to the adherend using the enclosing solution, an average length RSm of roughness profile elements on the surface of the polymer layer (hereinafter, also referred to as "roughness average length RSm") is preferably 3 to 600 μm, more preferably 5 to 500 μm, and still more preferably 10 to 300 μm.
In the present specification, the roughness average length RSm of the surface of the polymer layer means an average length RSm of roughness profile elements on the surface specified in JIS B0601: 2013.
The surface haze of the cover film can be changed by the respective components contained in the support and the polymer layer constituting the cover film or by the refractive index of the polymer layer, in addition to the above-described surface structure.
In the cover film, the surface roughness Rz and the roughness average length RSm of the surface of the polymer layer can be obtained by measuring a predetermined area of the surface of the polymer layer using a laser microscope (for example, "VK-9710" manufactured by KEYENCE CORPORATION) and analyzing the obtained image.
The surface roughness Rz and the roughness average length RSm of the surface of the polymer layer included in the cover film can be adjusted by controlling the surface structure of the surface of the polymer layer according to the method described as the method of adjusting the surface haze of the cover film.

(Glass transition temperature (Tg))

From the viewpoint that the brittleness of the film can be improved, a glass transition temperature Tg of the polymer layer is preferably 130°C or lower and more preferably 100°C or lower.
From the viewpoint that viscoelasticity of the polymer layer decreases to suppress adhesiveness with another

member and blocking resistance is further improved, the lower limit of the glass transition temperature Tg of the polymer layer is preferably 20°C or higher, more preferably 45°C or higher, and still more preferably 80°C or higher.

A method of measuring the glass transition temperature Tg of the polymer layer will be described in Examples later.

The glass transition temperature Tg of the polymer layer can be adjusted depending on the type and content ratio of the polymer constituting the polymer layer.

[Other layers]

The cover film may include a layer other than the support and the polymer layer.

Examples of other layers include a backing layer.

In order to prevent scratches on the surface of the cover film, to prevent blocking more reliably during storage in an extremely high temperature environment, or to obtain a curling balance of the cover film, the backing layer is provided on the back surface of the support (surface on a side opposite to the surface on which the polymer layer is provided).

Examples of a constituent material of the backing layer include a synthetic polymer having a high glass transition temperature, such as polystyrene and polymethyl methacrylate, and gelatin.

[Properties of cover film]

<Thickness of cover film>

A thickness of the cover film (sum of the thickness of the polymer layer and the thickness of the support) is not particularly limited, but from the viewpoint of operability and visibility during observation with a microscope, it is preferably 250 μm or less, more preferably 200 μm or less, and still more preferably 150 μm or less. From the viewpoint of handleability such as breakage resistance and sealing property, the lower limit thereof is preferably 50 μm or more.

<Internal haze (IH) and total haze (TH)>

From the viewpoint that the visibility during the observation with a microscope is more excellent, an internal haze (IH) of the cover film is preferably 5% or less, more preferably 1% or less, and still more preferably 0.3% or less. The lower limit value thereof is not particularly limited, and may be 0% or more.

The total haze (IH) of the cover film is the sum of the surface haze (SH) and the internal haze (IH), and is preferably 0.5% to 55% and more preferably 0.8% to 40%.

The internal haze (IH) and the total haze (TH) of the cover film can be measured using a haze meter (for example, "HGM-2DP", manufactured by Suga Test Instruments Co., Ltd.) according to JIS K-6714. Details of the measuring method will be described in Examples later.

<Retardation>

From the viewpoint of being suitable for observation with a polarization microscope, a thickness direction retardation (Rth) of the cover film at a wavelength of 590 nm is preferably -300 to 300 nm, more preferably -100 to 100 nm, and still more preferably more than -50 nm and less than 50 nm.

From the viewpoint of being suitable for observation with a polarization microscope, an in-plane retardation (Re) of the cover film at a wavelength of 590 nm is preferably 600 nm or less, more preferably 400 nm or less, and still more preferably 200 nm or less. The lower limit of the in-plane retardation (Re) is not particularly limited and may be 0 nm.

In the present specification, an in-plane retardation Re(λ) at a wavelength λ and a thickness direction retardation Rth(λ) at a wavelength λ refer to values measured by the following methods, respectively. In addition, in a case where a wavelength is not particularly described, λ is 590 nm.

Re(λ) and Rth(λ) can be calculated from measured values of an average refractive index ((nx + ny + nz)/3) and a film thickness (d (μm)) measured at a wavelength λ using a retardation measuring device (KOBRA-21WR, manufactured by Oji Scientific Instruments). The details of the measuring method will be described in Examples later.

[Manufacturing method of cover film]

A manufacturing method of the cover film is not particularly limited as long as the support and the polymer layer can be laminated, but it is preferable to provide the polymer layer on the surface of the support.

A method of providing the polymer layer on the support is not particularly limited, and examples thereof include

coating with a coater or a spray, casting, and transfer. Among these, it is preferable that a coating liquid obtained by dissolving the polymer in a solvent is applied onto the support, and then the coating film is dried to form the polymer layer.

The type of the solvent used for the coating liquid can be selected from the viewpoint of solubility of the polymer, drying rate, and surface tension, and examples thereof include toluene, methyl acetate, ethyl acetate, butyl acetate, acetone, methyl ethyl ketone, cyclohexanone, tetrahydrofuran, methyl-t-butyl ether, and xylene.

In addition, in a case where a solvent capable of swelling or dissolving the surface of the support is used as the solvent used for the coating liquid, interfacial mixing of the polymer and the support can be promoted, and an adhesion force between the polymer layer and the support can be increased.

From the above-described viewpoint, the coating liquid used for forming the polymer layer preferably includes a solvent selected from the group consisting of toluene, methyl acetate, ethyl acetate, butyl acetate, acetone, and methyl ethyl ketone, and more preferably includes at least one solvent selected from the group consisting of toluene, ethyl acetate, and acetone.

From the viewpoint of easily controlling the surface structure of the polymer layer, it is preferable that two or more kinds of solvents having different drying rates and surface tensions are mixed and used for forming the polymer layer, and a viscosity of the coating liquid is preferably 10 to 300 mPa·s and more preferably 20 to 150 mPa·s.

The viscosity of the coating liquid can be adjusted depending on the content of the polymer in the coating liquid, the weight-average molecular weight (Mw) of the polymer in the coating liquid, the type of the solvent, the addition of the thickener, and the like.

After applying the above-described coating liquid containing the polymer onto the support to form a coating film, it is preferable to perform a drying step of drying the coating film to remove the solvent from the coating film.

Examples of the drying treatment in the drying step include a method (for example, natural drying) of leaving the coating film to stand at room temperature (23°C) for a predetermined time, blast drying of blasting gas to the coating film, heating drying of heating the coating film or the support using a heating unit such as an oven, a heating plate, and a heating roll, and a combination thereof. In the drying step, it is preferable to perform at least one of the blast drying or the heating drying, and it is more preferable to perform a combination of the blast drying and the heating drying.

A temperature of the gas used in the blast drying is not particularly limited, and is preferably 50°C to 160°C and more preferably 80°C to 140°C. Examples of the gas used in the blast drying include air and nitrogen.

A temperature of the heating drying by the above-described heating unit is not particularly limited, and is preferably 50°C to 160°C. In addition, a heating time is preferably 0.5 to 5 minutes.

By transferring unevenness to the surface of the polymer layer or the surface of the coating film containing the polymer, formed on the surface of the support, using an induction heating roll having unevenness on a surface thereof, the surface structure on the surface of the polymer layer can be controlled.

More specifically, examples thereof include a method of pressing the above-described roll set at a higher temperature than the Tg of the coating film against the surface of the coating film, and an aspect of using a backup roll or the like to sandwich the film is preferable. In addition, a shape of the surface uneven structure can be appropriately adjusted by a shape of the embossing, the surface temperature and pressing pressure of the induction heating roll, the contact time, and the like.

A method of forming the polymer layer containing the silane coupling agents is not particularly limited, and examples thereof include a first method of adding the silane coupling agents to a coating liquid for forming a polymer layer, applying the coating liquid containing the polymer and the silane coupling agents onto the support, and drying the coating film to form the polymer layer; a second method of applying a coating liquid obtained by dissolving the silane coupling agents in a solvent onto the surface of the coating film or the polymer layer containing the polymer, formed on the support, and drying the coating film to form a polymer layer; and a third method of simultaneously applying (multilayer application) a coating liquid containing the polymer and a coating liquid obtained by dissolving the silane coupling agents in a solvent onto the transparent support, and drying the coating film to form a polymer layer.

From the viewpoint that the silane coupling agents can be effectively utilized with a small amount, the above-described second method or third method is preferable. In the polymer layer containing the silane coupling agents, formed by the above-described second method or third method, the silane coupling agent is likely to be unevenly distributed on the surface of the polymer layer on a side opposite to the support.

The solvent of the coating liquid obtained by dissolving the silane coupling agents in the solvent used in the above-described second method and third method is not particularly limited as long as the silane coupling agent can be dissolved, and examples thereof include the solvents exemplified as the solvent capable of dissolving the above-described polymer. Among those, from the viewpoint of more excellent adhesiveness, ethyl acetate is preferable.

[Applications]

The cover film according to the embodiment of the present invention can be suitably used as a cover film used for covering a test subject on a substrate. Among these, the cover film can be suitably used for preparing a specimen

for microscopic observation, and can be more suitably applied to a microscope having an automatic enclosing device.

The applications of the cover film according to the embodiment of the present invention are not limited to the above-described applications, and for example, the cover film can be used for applications such as sealing of a thin film on a substrate and protection of an underlayer by lamination. In addition, the substrate bonded to the cover film may be glass or a film-shaped material (resin or the like).

Examples

Hereinafter, the present disclosure will be more specifically described with reference to Examples. The materials, the used amounts, the proportions, the treatment contents, the treatment procedures, and the like described in the following examples can be appropriately changed without departing from the gist of the present disclosure. Therefore, the scope of the present disclosure is not limited to the following specific examples.

[Material]

Materials used in Examples and Comparative Examples were prepared by the following methods.

<Production of polymer solution>

Each of polymer solutions A to E as a coating liquid for forming a polymer layer was produced according to the following production methods.

- Polymer solution A -

At 80°C in a nitrogen atmosphere, a mixed solution of 90 parts by mass of ethyl acrylate, 210 parts by mass of methyl methacrylate, 98 parts by mass of toluene, 66 parts by mass of ethyl acetate, and 1.8 parts by mass of azoisobutyronitrile was added to 38 parts by mass of toluene and 25 parts by mass of ethyl acetate over 2 hours. The obtained mixed solution was reacted for 2 hours while maintaining the temperature at 80°C. Thereafter, 1.0 part by mass of azoisobutyronitrile was added to the above-described mixed solution, and the mixture was reacted at 90°C such that a polymer having a weight-average molecular weight Mw of 80,000 was formed. Thereafter, 111 parts by mass of toluene and 368 parts by mass of ethyl acetate were added to the above-described mixed solution to obtain a polymer solution A containing a polymer.

A glass transition temperature (Tg) of a polymer layer produced using the polymer solution A was 85°C. A method of measuring the glass transition temperature (Tg) of the polymer layer will be described later.

- Polymer solution B -

At 80°C in a nitrogen atmosphere, a mixed solution of 90 parts by mass of ethyl acrylate, 210 parts by mass of methyl methacrylate, 98 parts by mass of toluene, 66 parts by mass of ethyl acetate, and 1.8 parts by mass of azoisobutyronitrile was added to 38 parts by mass of toluene and 25 parts by mass of ethyl acetate over 2 hours. The obtained mixed solution was reacted for 2 hours while maintaining the temperature at 80°C. Thereafter, 1.0 part by mass of azoisobutyronitrile was added to the above-described mixed solution, and the mixture was reacted at 90°C such that a polymer having a weight-average molecular weight Mw of 70,000 was formed. Thereafter, 111 parts by mass of toluene, 368 parts by mass of ethyl acetate, 3 parts by mass of dinonyl phthalate with respect to 100 parts by mass of the formed polymer were added to the above-described mixed solution to obtain a polymer solution B containing a polymer.

A glass transition temperature (Tg) of a polymer layer produced using the polymer solution B was 85°C.

- Polymer solution C -

A polymer solution C containing a polymer was obtained according to the method of producing the above-described polymer solution B, except that 15 parts by mass of hydrophobic silica ("NX90S", surface-treated with hexamethyldisilazane, manufactured by Nippon Aerosil Co., Ltd.) having an average primary particle diameter of 20 nm was used instead of the dinonyl phthalate.

A glass transition temperature (Tg) of a polymer layer produced using the polymer solution C was 84°C.

- Polymer solution D -

At 80°C in a nitrogen atmosphere, a mixed solution of 60 parts by mass of ethyl acrylate, 180 parts by mass

of methyl methacrylate, 60 parts by mass of ethyl methacrylate, 98 parts by mass of toluene, 66 parts by mass of ethyl acetate, and 1.8 parts by mass of azoisobutyronitrile was added to 38 parts by mass of toluene and 25 parts by mass of ethyl acetate over 2 hours. The obtained mixed solution was reacted for 2 hours while maintaining the temperature at 80°C. Thereafter, 1.0 part by mass of azoisobutyronitrile was added to the above-described mixed solution, and the mixture was reacted at 90°C such that a polymer having a weight-average molecular weight Mw of 100,000 was formed. Thereafter, 111 parts by mass of toluene and 368 parts by mass of ethyl acetate were added to the above-described mixed solution to obtain a polymer solution D containing a polymer.

A glass transition temperature (Tg) of a polymer layer produced using the polymer solution D was 97°C.

- Polymer solution E -

At 80°C in a nitrogen atmosphere, a mixed solution of 60 parts by mass of ethyl acrylate, 180 parts by mass of methyl methacrylate, 60 parts by mass of butyl methacrylate, 98 parts by mass of toluene, 66 parts by mass of ethyl acetate, and 1.8 parts by mass of azoisobutyronitrile was added to 38 parts by mass of toluene and 25 parts by mass of ethyl acetate over 2 hours. The obtained mixed solution was reacted for 2 hours while maintaining the temperature at 80°C. Thereafter, 1.0 part by mass of azoisobutyronitrile was added to the above-described mixed solution, and the mixture was reacted at 90°C such that a polymer having a weight-average molecular weight Mw of 100,000 was formed. Thereafter, 111 parts by mass of toluene and 368 parts by mass of ethyl acetate were added thereto to obtain a polymer solution E containing a polymer.

A glass transition temperature (Tg) of a polymer layer produced using the polymer solution E was 90°C.

- Polymer solution F -

At 80°C in a nitrogen atmosphere, a mixed solution of 75 parts by mass of ethyl acrylate, 150 parts by mass of methyl methacrylate, 75 parts by mass of ethyl methacrylate, 98 parts by mass of toluene, 66 parts by mass of ethyl acetate, and 1.8 parts by mass of azoisobutyronitrile was added to 38 parts by mass of toluene and 25 parts by mass of ethyl acetate over 2 hours. The obtained mixed solution was reacted for 2 hours while maintaining the temperature at 80°C. Thereafter, 1.0 part by mass of azoisobutyronitrile was added to the above-described mixed solution, and the mixture was reacted at 90°C such that a polymer having a weight-average molecular weight Mw of 100,000 was formed. Thereafter, 111 parts by mass of toluene and 368 parts by mass of ethyl acetate were added to the above-described mixed solution to obtain a polymer solution F containing a polymer.

A glass transition temperature (Tg) of a polymer layer produced using the polymer solution F was 90°C.

<Coating liquid for forming polymer layer>

Each of diluent solutions A to C was prepared by mixing solvents selected from toluene, ethyl acetate, and acetone at the following mixing ratios (mass ratios).

$$\text{Diluent solution A: toluene/ethyl acetate} = 20/80 \text{ (mass ratio)}$$

$$\text{Diluent solution B: toluene/ethyl acetate} = 25/75 \text{ (mass ratio)}$$

$$\text{Diluent solution C: toluene/ethyl acetate/acetone} = 20/20/60 \text{ (mass ratio)}$$

Any one of the diluent solutions A to C was added to each of the polymer solutions produced above to prepare a coating liquid for forming a polymer layer (coating liquids 1 to 10), having a predetermined liquid viscosity. In a case where the polymer solution was diluted with each diluent solution, a dilution rate was adjusted so that the liquid viscosity (unit: mPa·s) of each coating liquid was a numerical value shown in Table 1.

Table 1 described later shows the name of the coating liquid prepared in each of Examples and Comparative Examples, the type of the polymer solution used, the type of the diluent solution, and the liquid viscosity of the prepared coating liquid.

<Preparation of silane coupling agent coating liquid>

109.89 parts by mass of ethyl acetate was added to 0.11 parts by mass of a silane coupling agent KBM403 (γ-

glycidoxypropyltrimethoxysilane, manufactured by Shin-Etsu Chemical Co., Ltd.) to obtain a silane coupling agent coating liquid.

<Support>

- Support A1 -

A support A1 was produced according to the following method.

(Preparation of cellulose ester solution A1)

The following components were put into a mixing tank and stirred while being heated to dissolve each component, thereby preparing a cellulose ester solution A1.

| | |
|---|---|
| · Cellulose ester (acetyl substitution degree: 2.86, viscosity average polymerization degree: 310) | 100 parts by mass |
| · Sugar ester mixture obtained by mixing the following mixture of sugar ester compounds (I) and (II) and the following sugar ester compound (III) with a mass ratio of 12:3 (mixture of sugar ester compounds (I) and (II): sugar ester compound (III)) | |
| · Methylene chloride | 384 parts by mass |
| · Methanol | 69 parts by mass |
| · Butanol | 9 parts by mass |

The addition amount of the above-described sugar ester mixture contained in the cellulose ester solution A1 was adjusted such that the content of the sugar ester mixture contained in the support A1 produced using the cellulose ester solution A1 (the total content of the above-described sugar ester compounds) was the content shown in Table 1.

The above-described mixture of the sugar ester compounds (I) and (II) was a mixture of aromatic sugar ester compounds represented by General Formulae (I) and (II) described above, in which G represents a sucrose residue, a substituent L-$R^1$ represents a benzoyl group, and an average degree of substitution of the sugar ester compounds (I) and (II) (average value of n and q) was 5.7.

In addition, the above-described sugar ester compound (III) was an aliphatic sugar ester compound represented by General Formula (III) described above, in which G' represents a sucrose residue, a substituent L'-$R^2$ represents any one of an acetyl group or an isobutyryl group, and among 8 hydroxy groups in the sucrose residue, an average of 2 hydroxy groups are substituted with acetyl groups and an average of 6 hydroxy groups are substituted with isobutyryl groups.

(Preparation of matting agent dispersion liquid B1)

The following components were put into a disperser and stirred to dissolve each component, thereby preparing a matting agent dispersion liquid B1.

· Silica particle dispersion (average particle diameter: 16 nm, "AEROSIL R972", manufactured by Nippon Aerosil Co., Ltd.): 10.0 parts by mass
· Methylene chloride: 72.8 parts by mass
· Methanol: 3.9 parts by mass
· Butanol: 0.5 parts by mass
· Cellulose ester solution A1: 10.3 parts by mass

The matting agent dispersion liquid B1 was added to the cellulose ester solution A1, and the mixture was sufficiently stirred while being heated to dissolve each component, thereby preparing a dope A1. A mixing ratio of the cellulose ester solution A1 and the matting agent dispersion liquid B1 was adjusted such that the total content of the sugar ester compounds represented by Formulae (I) to (III) in the support A1 produced using the dope A1 was set to the content shown in Table 1.

The obtained dope A1 was heated to 30°C and cast on a mirror surface stainless steel drum having a diameter of 3 m, through a casting geeser. The surface temperature of the drum was set to -5°C, and the coating width was set to 1470 mm. A spatial temperature of the entire flow spreading part was set to 15°C. At a position 50 cm ahead of the end part of the casting portion, the cellulose ester film formed on the surface of the drum was peeled off from the drum,

and both ends of the peeled cellulose ester film in a width direction were clipped with a pin tenter.

The cellulose ester web held by the pin tenter was transported to a drying zone. In an initial drying, hot air at 45°C was blown. Next, the cellulose ester film was dried by heating at 110°C for 13 minutes and further at 140°C for 25 minutes to obtain a support A1 having a thickness shown in Table 1 below.

The lowest pKa among pKa's of hydrolyzates of the ester compounds contained in the support A1 was 5.0, which was a pKa of at least one hydrolyzate of the above-described sugar ester compound (III). Therefore, the support A1 did not contain the specific ester compound.

- Support A2 -

A support A2 was produced according to the following method.

(Preparation of core layer cellulose acylate dope)

The following components were put into a mixing tank and the mixture was stirred to dissolve each component, thereby preparing a cellulose acetate solution A2a used as a core layer cellulose acylate dope.

· Cellulose acetate having acetyl substitution degree of 2.88: 100 parts by mass

· Mixture containing an aliphatic carboxylic acid ester oligomer (oligomer A1) described later and a compound represented by Formula (A-3), in which a mass ratio of the content of the oligomer A1:the content of the compound represented by Formula (A-3) was 4:1

| | |
|---|---|
| Methylene chloride | 430 parts by mass |
| Methanol | 64 parts by mass |

The addition amount of the above-described mixture contained in the cellulose ester solution A2a was adjusted such that the total content of a polyester A and the compound represented by Formula (A-3) contained in a support A2 which was produced by the following method using the cellulose ester solution A2a and a cellulose ester solution A2b described later was the content shown in Table 1.

A-3

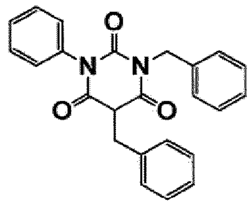

The oligomer A1 was an aliphatic carboxylic acid ester oligomer which is a condensate of 1,2-cyclohexyldicarboxylic acid and ethylene glycol, and has a terminal structure in which hydrogen atoms of hydroxyl groups at both terminals are substituted (sealed) with a cyclohexanoyl group. A number-average molecular weight of the oligomer A1 was 850.

(Preparation of outer layer cellulose acylate dope)

10 parts by mass of a matte agent solution B2 having the following composition was added to 90 parts by mass of the above-described cellulose acetate solution A2a (core layer cellulose acylate dope) to prepare a cellulose acetate solution A2b to be used as an outer layer cellulose acylate dope.

[Composition of matting agent solution]

| | |
|---|---|
| · Silica particles having an average particle diameter of 20 nm (AEROSIL R972, manufactured by Nippon Aerosil Co., Ltd.) | 2 parts by mass |
| · Methylene chloride | 76 parts by mass |
| · Methanol | 11 parts by mass |
| · Cellulose acetate solution A2a (core layer cellulose acylate dope) | 1 part by mass |

(Production of support A2)

The above-described core layer cellulose acylate dope and the above-described outer layer cellulose acylate dope were filtered through a filter paper having an average hole diameter of 34 μm and a sintered metal filter having an average hole diameter of 10 μm. The filtered core layer cellulose acylate dope and the filtered outer layer cellulose acylate dope were simultaneously cast in three layers from a casting port of a band casting machine onto a drum surface having a surface temperature of 20°C to form a laminated film in which the core layer was sandwiched between two outer layers.

Subsequently, the laminated film was peeled off from the drum, and both ends of the laminated film in the width direction were fixed with a tenter clip. The laminated film fixed with the tenter clip was dried while being stretched in the width direction at a stretching ratio of 1.1 times. Thereafter, the laminated film was transported between rolls of a heat treatment device to be further dried, thereby producing a support A2 having a thickness shown in Table 1 below.

The lowest pKa among pKa's of hydrolyzates of the ester compounds contained in the support A2 was 4.0, which was a pKa of at least one hydrolyzate of the above-described compound represented by Formula (A-3). Therefore, the support A2 did not contain the specific ester compound.

- Support A3 -

A support A3 was produced according to the above-described method of producing the support A2, except that the above-described compound represented by Formula (A-3) was not used. The support A3 had a laminated structure in which a core layer was sandwiched between two outer layers and had a thickness shown in Table 1 below.

The lowest pKa among pKa's of hydrolyzates of the ester compounds contained in the support A3 was 5.0, which was a pKa of 1,2-cyclohexyldicarboxylic acid as a hydrolyzate of the oligomer A1. Therefore, the support A3 did not contain the specific ester compound.

- Supports A4 to A7 -

Each of supports A4 to A7 was produced according to the above-described method of producing the support A1, except that a mixture containing triphenyl phosphate and biphenyl diphenyl phosphate in a mass ratio of 2:1 (triphenyl phosphate:biphenyl diphenyl phosphate) was used instead of the sugar ester compounds represented by Formulae (I) to (III), and each addition amount of the mixture contained in the cellulose ester solution was adjusted such that the total content of the phosphoric acid ester compounds contained in the support produced using the cellulose ester solution was the content shown in Table 1 below.

Both triphenyl phosphate and biphenyl diphenyl phosphate correspond to the specific ester compound satisfying the requirement 1 because they generate phosphoric acid having a pKa of 2.0 by hydrolysis.

However, in the supports A4 and A5, the total content of the specific ester compounds was 1% by mass or less with respect to the total mass of each support. On the other hand, in the supports A6 and A7, the total content of the specific ester compounds was more than 1% by mass with respect to the total mass of each support.

- Support B -

A film was formed using a commercially available acrylic resin (DELPET 980N, manufactured by Asahi Kasei Corporation) by a known melt extrusion method to obtain a support B. The support B did not contain the specific ester compound.

- Support C -

A film was formed using a commercially available cycloolefin polymer ("ZEONOR (registered trademark) ZF-14, manufactured by Nippon Zeon Co., Ltd.) by a known melt extrusion method to obtain a support C. The support C did not contain the specific ester compound.

- Support D -

A film was formed using a commercially available polyester ("MA-8334P", polyethylene terephthalate manufactured by Unitika Ltd.) by a known melt extrusion method, and the obtained film was biaxially stretched and heat-fixed to obtain a support D. The support D did not contain the specific ester compound.

[Production of cover film]

[Example 1 (production condition A)]

The coating liquid 1 was applied onto a surface of the support A1 produced by the above-described method by an extrusion coating method. A coating amount of the coating liquid 1 was adjusted such that the thickness of the polymer layer after drying was a value shown in Table 1 below. After applying the coating liquid 1, the obtained coating layer was heated and dried at 100°C for 5 minutes using a hot air dryer to produce a cover film of Example 1.

[Examples 2 to 4 (production condition A and post-treatment A) and Comparative Example 3 (production condition A and post-treatment B)]

Each of cover films of Examples 2 to 4 was produced according to the method described in Example 1 above, except that the coating liquid 2 was used instead of the coating liquid 1, and after the coating layer was subjected to the heating and drying treatment using a hot air dryer at 100°C for 5 minutes, a post-treatment of pressing an induction heating roll having a surface temperature of 150°C and an uneven embossing on a surface against the coating layer was further performed. The surface shape of the coating layer was adjusted to the shape of the embossing of the induction heating roll, and the surface haze of the cover film was adjusted to a range of 0.5% to 50% (post-treatment A).

In addition, a cover film of Comparative Example 3 was produced according to the method described in Examples 2 to 4, except that an induction heating roll having a different embossing shape was used. The surface shape of the coating layer was adjusted to the shape of the embossing of the induction heating roll, and the surface haze of the cover film was adjusted to 51% (post-treatment B).

[Examples 5 to 10, 12, and 14 to 20, and Comparative Examples 1, 2, and 4 (production condition A)]

Each of cover films of Examples 5 to 10, 12, and 14 to 20 and Comparative Examples 1, 2, and 4 was produced according to the method described in Example 1 above, except that the coating liquid and the support shown in Table 1 described below were used.

[Example 11 (production condition B)]

The coating liquid 7 was applied onto the surface of the support A2 by an extrusion coating method. A coating amount of the coating liquid 7 was adjusted such that the thickness of the polymer layer after drying was a value shown in Table 1 below. In a zone on the downstream side in a transport direction of the support immediately after the coating liquid 7 was applied onto the support A2, the support and the coating layer were heated by bringing a heating roll heated to 65°C into contact with a surface of the support on a side opposite to the surface on which the coating layer had been formed to dry the coating layer. Subsequently, the coating layer was subjected to a heating and drying treatment at 100°C for 5 minutes using a hot air dryer to produce a cover film of Example 11.

[Example 13 (production condition C)]

The coating liquid 7 and the above-described silane coupling agent coating liquid were applied onto the surface of the support A2 by an extrusion multilayered coating method. A coating amount of the coating liquid 7 was adjusted such that the thickness of the polymer layer after drying was a value shown in Table 1 below. A coating amount of the silane coupling agent coating liquid was an amount adjusted such that the amount of the silane coupling agent with respect to the area of the surface of the support A2 was 13.5 $mg/m^2$. After the application of the coating liquid 7 and the silane coupling agent coating liquid, the coating layer was dried at 100°C for 5 minutes to produce a cover film of Example 13.

[Measurement of physical properties of cover film]

[Surface haze and internal haze]

The cover film produced in each of Examples and Comparative Examples was cut into a size of 40 mm × 80 mm to obtain a film sample. The obtained film sample was measured using a haze meter (HGM-2DP, manufactured by Suga Test Instruments Co., Ltd.) according to JIS K-6714 in an environment of 25°C and a relative humidity of 60% to obtain the total haze (TH) of the film sample.

Subsequently, a laminate was produced by sandwiching the film sample between two glass plates through

xylene which was a liquid subjected to index matching. The internal haze (IH) of the film sample was obtained by measuring the haze of the obtained laminate in the same manner as described above.

Furthermore, the surface haze (SH) of the film sample was obtained by calculating a difference (TH - IH) between the total haze (TH) of the film sample and the internal haze (IH) of the film sample.

[Surface roughness Rz and roughness average length RSm]

Using a laser microscope (VK-9710, manufactured by KEYENCE CORPORATION), the surface roughness Rz and the roughness average length RSm (both in units of μm) of the surface of the polymer layer were obtained by measuring an area of 2.6 mm × 0.8 mm of the surface of the cover film produced in each example.

[Retardation (Rth)]

The cover film produced in each of Examples and Comparative Examples was cut into a size of 50 mm × 50 mm to obtain a film sample. The obtained film sample was humidified at 25°C and a relative humidity of 60% for 2 hours or longer, and light having a wavelength of 590 nm was incident on the film sample using a retardation measuring device (KOBRA-21WR, manufactured by Oji Scientific Instruments) to measure a thickness direction retardation (Rth) of each film sample.

[Glass transition temperature (Tg) of polymer layer]

The polymer layer was peeled off from each cover film. The obtained polymer layer was cut into a size of 5 mm × 30 mm to obtain a sample of the polymer layer. The obtained sample was humidified in an environment of 25°C and a relative humidity of 60% for 2 hours or longer, and using a dynamic viscoelasticity measuring device (Vibron: DVA-225 (manufactured by IT Keisoku Seigyo Co., Ltd.)), a peak temperature of a loss tangent (loss elastic modulus/storage elastic modulus) observed in a case of raising the temperature from 30°C was measured under the conditions of a grip spacing of 20 mm, a temperature rising rate of 5 °C/min, and a frequency of 100 Hz, and the glass transition temperature Tg (°C) was obtained.

[Evaluation of cover film]

[Peeling over time]

The cover film produced in each of Examples and Comparative Examples was bonded to glass slide using a cover aid automatic enclosing device SCA-Film-J0 (manufactured by SAKURA SEIKI Co., Ltd.) to produce a laminate. As an enclosing solvent, xylene was used.

Two laminates were produced for each of Examples and Comparative Examples, one laminate was left in an environment of 40°C and a relative humidity of 80% for 14 days (condition 1), and the other laminate was left in an environment of 10°C and a relative humidity of 30% for 14 days (condition 2), and then a film peeling acceleration test was performed.

An adhesive site of the laminates after the acceleration test was visually observed, and the generation of air bubbles and peeling at the interface between the substrate and the polymer layer were evaluated according to the following standard. Even in a case where air bubbles were observed at the interface between the substrate and the polymer layer, it can be evaluated in practice that the case is the same as a case where the peeling occurred.

(Evaluation standard)

0: under both conditions, the air bubbles and the peeling were not observed.
1: under any one of the conditions, at least one of the air bubbles or the peeling was observed faintly.
2: under both conditions, at least one of the air bubbles or the peeling was observed faintly.
3: under any one of the conditions, at least one of the air bubbles or the peeling was observed a little.
4: under both conditions, at least one of the air bubbles or the peeling was observed a little.
5: under at least any one of the conditions, at least one of the air bubbles or the peeling was observed clearly.

The evaluation results are described in the table. In practice, the cases where the evaluation results are 0 to 4 are not problematic.

[Mass reduction]

The cover film produced in each of Examples and Comparative Examples was bonded to glass slide using a cover aid automatic enclosing device SCA-Film-J0 (manufactured by SAKURA SEIKI Co., Ltd.). In this case, xylene was used as an enclosing solvent.
20 enclosed samples were produced and sufficiently dried at room temperature, and in a state in which a glass slide of one enclosed sample was in close contact with a support of another enclosed sample, a total of the 20 enclosed samples were laminated. Subsequently, an acceleration test was performed in which the obtained laminate was stored for 500 hours in an environment of 85°C and a relative humidity of 85%.
From the mass of the laminate measured before and after the acceleration test, a ratio of a difference in mass of the laminate before and after the acceleration test with respect to the mass of the laminate before the acceleration test [{(Mass of laminate before acceleration test) - (Mass of laminate after acceleration test)}/(Mass of laminate before acceleration test)] (unit: % by mass) was calculated, and a mass reduction rate due to the acceleration test was obtained.
From the obtained mass reduction rate, the mass reduction of the cover film was evaluated according to the following standard.

(Evaluation standard)

1: mass reduction rate was 0.1% by mass or less.
2: mass reduction rate was more than 0.1% by mass and 1% by mass or less.
3: mass reduction rate was more than 1% by mass.

The evaluation results are described in the table. In the case of the evaluation 1 or 2, there is no problem in practice.
Table 1 shows production conditions and characteristics of the polymer layer, characteristics of the support, physical properties of the cover film, and evaluation results.
In the following table, the column of "Name" of "Coating liquid" in "Polymer layer" indicates a coating liquid for forming a polymer layer, used in each of Examples and Comparative Examples, the columns of "Polymer solution" and "Diluent solution" indicate a polymer solution and a diluent solution used for each coating liquid, and the column of "Liquid viscosity" indicates a viscosity (unit: mPa·s) of each coating liquid.
The column of "Production condition" of "Production step" in "Polymer layer" indicates a method of drying the coating layer performed in each of Examples and Comparative Examples. In addition, the column of "Post-treatment" indicates that the above-described post-treatment A or B was performed on the coating film after drying in Examples 2 to 4 and Comparative Example 3.
The column of "Thickness [μm]" of "Polymer layer" and "Support" indicates the thickness (unit: μm) of each of the support and the polymer layer of the cover film of each of Examples and Comparative Examples.
In a case where the support used in each of Examples and Comparative Examples contained an ester compound, the type of the ester compound (the column of "Type"), the minimum value of the pKa of the hydrolyzate of the ester compound (the column of "pKa of decomposition product"), and the total content of the ester compounds with respect to the total mass of the support (% by mass; the column of "Content [%]) are indicated in the column of "Ester compound" of "Support" in the following table.
The ester compounds shown in the column of "Type" are as follows.

A: mixture of the above-described sugar esters (I) to (III)
B: oligomer A1 and the compound represented by Formula (A-3)
C: oligomer A1
D: triphenyl phosphate and biphenyl diphenyl phosphate

In the column of "Rth(590) [nm]" of "Cover film" in the table, the notation "< 100" indicates that the thickness direction retardation (Rth) of the film sample, measured by the above-described method, was 50 nm or more and less than 100 nm, and the notation "< 50" indicates that the thickness direction retardation (Rth) of the film sample, measured by the above-described method, was more than -50 nm and less than 50 nm.

[Table 1]

| Table 1 (1) | Polymer layer | | | | | | |
|---|---|---|---|---|---|---|---|
| | Coating liquid | | | | Production step | | Thickness [µm] |
| | Name | Polymer solution | Diluent solution | Liquid viscosity [mPa·s] | Production condition | Post-treatment | |
| Example 1 | 1 | A | A | 120 | A | - | 20 |
| Example 2 | 2 | A | B | 120 | A | A | 20 |
| Example 3 | 2 | A | B | 120 | A | A | 20 |
| Example 4 | 2 | A | B | 120 | A | A | 20 |
| Example 5 | 3 | B | A | 110 | A | - | 20 |
| Example 6 | 4 | B | A | 70 | A | - | 20 |
| Example 7 | 5 | C | A | 120 | A | - | 20 |
| Example 8 | 6 | D | A | 30 | A | - | 20 |
| Example 9 | 7 | D | C | 30 | A | - | 10 |
| Example 10 | 7 | D | C | 30 | A | - | 20 |
| Example 11 | 7 | D | C | 30 | B | - | 20 |
| Example 12 | 7 | D | C | 30 | A | - | 30 |
| Example 13 | 7 | D | C | 30 | C | - | 20 |
| Example 14 | 7 | D | C | 30 | A | - | 20 |
| Example 15 | 8 | D | A | 30 | A | - | 20 |
| Example 16 | 8 | D | A | 30 | A | - | 20 |
| Example 17 | 8 | D | A | 30 | A | - | 20 |
| Example 18 | 8 | D | A | 30 | A | - | 20 |
| Example 19 | 9 | E | A | 30 | A | - | 20 |
| Example 20 | 10 | F | C | 30 | A | - | 20 |
| Comparative Example 1 | 2 | A | B | 120 | A | - | 20 |
| Comparative Example 2 | 2 | A | B | 120 | A | - | 20 |
| Comparative Example 3 | 2 | A | B | 120 | A | B | 20 |
| Comparative Example 4 | 6 | D | A | 30 | A | - | 20 |

[Table 2]

| Table 1 (2) | Support | | | | |
|---|---|---|---|---|---|
| | Name | Ester compound | | | Thickness [µm] |
| | | Type | pKa of decomposition product | Content [%] | |
| Example 1 | A1 | A | 5.0 | 6.5 | 120 |
| Example 2 | A2 | B | 4.0 | 12.3 | 120 |

(continued)

| Table 1 (2) | Support | | | | |
|---|---|---|---|---|---|
| | Name | Ester compound | | | Thickness [μm] |
| | | Type | pKa of decomposition product | Content [%] | |
| Example 3 | A2 | B | 4.0 | 12.3 | 120 |
| Example 4 | A2 | B | 4.0 | 12.3 | 120 |
| Example 5 | A2 | B | 4.0 | 12.3 | 120 |
| Example 6 | A2 | B | 4.0 | 12.3 | 120 |
| Example 7 | A2 | B | 4.0 | 12.3 | 120 |
| Example 8 | A2 | B | 4.0 | 12.3 | 120 |
| Example 9 | A2 | B | 4.0 | 12.3 | 130 |
| Example 10 | A2 | B | 4.0 | 12.3 | 120 |
| Example 11 | A2 | B | 4.0 | 12.3 | 120 |
| Example 12 | A2 | B | 4.0 | 12.3 | 110 |
| Example 13 | A2 | B | 4.0 | 12.3 | 120 |
| Example 14 | A3 | C | 5.0 | 9.9 | 120 |
| Example 15 | A4 | D | 2.0 | 0.5 | 120 |
| Example 16 | A5 | D | 2.0 | 1.0 | 120 |
| Example 17 | B | - | - | - | 120 |
| Example 18 | C | - | - | - | 120 |
| Example 19 | A1 | A | 5.0 | 6.5 | 120 |
| Example 20 | A2 | B | 4.0 | 12.3 | 120 |
| Comparative Example 1 | A1 | A | 5.0 | 6.5 | 120 |
| Comparative Example 2 | A6 | D | 2.0 | 10.7 | 120 |
| Comparative Example 3 | A2 | B | 4.0 | 12.3 | 120 |
| Comparative Example 4 | A7 | D | 2.0 | 2.9 | 120 |

[Table 3]

| Table 1 (3) | Cover film | | | | | Evaluation result | |
|---|---|---|---|---|---|---|---|
| | Rth(590) [nm] | Surface haze [%] | Internal haze [%] | Rz [μm] | RSm [μm] | Mass reduction | Peeling over time |
| Example 1 | < 100 | 0.6 | 0.1 | 2.4 | 300 | 1 | 3 |
| Example 2 | < 50 | 1.4 | 0.1 | 0.3 | 15 | 1 | 1 |
| Example 3 | < 50 | 10.0 | 0.1 | 5.0 | 120 | 1 | 1 |
| Example 4 | < 50 | 40.0 | 0.1 | 8.0 | 150 | 1 | 4 |
| Example 5 | < 50 | 0.7 | 0.1 | 2.4 | 290 | 1 | 2 |
| Example 6 | < 50 | 0.8 | 0.1 | 2.4 | 230 | 1 | 2 |
| Example 7 | < 50 | 1.2 | 0.2 | 1.5 | 100 | 1 | 2 |
| Example 8 | < 50 | 1.3 | 0.1 | 2.4 | 150 | 1 | 2 |
| Example 9 | < 50 | 1.1 | 0.1 | 3.0 | 210 | 1 | 2 |

(continued)

| Table 1 (3) | Cover film | | | | | Evaluation result | |
|---|---|---|---|---|---|---|---|
| | Rth(590) [nm] | Surface haze [%] | Internal haze [%] | Rz [μm] | RSm [μm] | Mass reduction | Peeling over time |
| Example 10 | < 50 | 1.6 | 0.1 | 3.0 | 150 | 1 | 1 |
| Example 11 | < 50 | 1.8 | 0.1 | 3.1 | 130 | 1 | 0 |
| Example 12 | < 50 | 2.0 | 0.1 | 3.0 | 120 | 1 | 0 |
| Example 13 | < 50 | 1.6 | 0.1 | 3.0 | 150 | 1 | 0 |
| Example 14 | < 50 | 1.6 | 0.1 | 3.0 | 150 | 1 | 1 |
| Example 15 | < 100 | 1.3 | 0.1 | 2.4 | 150 | 1 | 2 |
| Example 16 | < 100 | 1.3 | 0.1 | 2.4 | 150 | 2 | 2 |
| Example 17 | < 50 | 1.3 | 0.1 | 2.4 | 150 | 1 | 2 |
| Example 18 | < 50 | 1.3 | 0.1 | 2.4 | 150 | 1 | 2 |
| Example 19 | < 50 | 1.3 | 0.1 | 2.4 | 150 | 1 | 2 |
| Example 20 | < 50 | 1.9 | 0.1 | 3.0 | 140 | 1 | 0 |
| Comparative Example 1 | < 100 | 0.3 | 0.1 | 2.0 | 500 | 1 | 5 |
| Comparative Example 2 | < 100 | 0.3 | 0.1 | 2.0 | 500 | 3 | 2 |
| Comparative Example 3 | < 50 | 51 | 0.1 | 10.0 | 200 | 1 | 5 |
| Comparative Example 4 | < 100 | 1.3 | 0.1 | 2.4 | 150 | 3 | 2 |

From the results shown in the tables, it was confirmed that the cover film according to the embodiment of the present invention had more excellent effect of the present invention as compared with the cover films of Comparative Examples 1 to 4, in which the content of the specific ester compound was more than 1% by mass with respect to the total mass of the support or the surface haze thereof was less than 0.5% or more than 50%.

## Claims

**1.** A cover film comprising:

a support; and
a polymer layer containing a polymer,
wherein a surface haze of the cover film is 0.5% to 50%, and
a content of an ester compound satisfying the following requirement 1 in the support is 1% by mass or less with respect to a total mass of the support,
the requirement 1: a pKa of at least one hydrolyzate of the ester compound is 2.5 or less.

**2.** The cover film according to claim 1,
wherein a surface roughness Rz of a surface of the polymer layer on a side opposite to the support is 0.1 to 30 μm.

**3.** The cover film according to claim 1 or 2,
wherein an average length RSm of roughness profile elements of a surface of the polymer layer on a side opposite to the support is 5 to 500 μm.

**4.** The cover film according to claim 1 or 2,

wherein an internal haze of the cover film is 1% or less.

5. The cover film according to claim 1 or 2,
wherein the content of the ester compound is 0.6% by mass or less with respect to the total mass of the support.

6. The cover film according to claim 1 or 2,
wherein the polymer layer contains a plasticizer.

7. The cover film according to claim 1 or 2,
wherein the cover film is used for covering a test subject on a substrate.

**INTERNATIONAL SEARCH REPORT**

International application No.
**PCT/JP2022/034917**

**A. CLASSIFICATION OF SUBJECT MATTER**

***B32B 27/00***(2006.01)i; ***B32B 7/023***(2019.01)i; ***G02B 21/34***(2006.01)i
FI: B32B27/00 B; B32B7/023; G02B21/34

According to International Patent Classification (IPC) or to both national classification and IPC

**B. FIELDS SEARCHED**

Minimum documentation searched (classification system followed by classification symbols)

B32B1/00-43/00, G02B19/00-21/00, 21/06-21/36

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2021/187262 A1 (FUJIFILM CORP) 23 September 2021 (2021-09-23) entire text | 1-7 |
| A | JP 2008-3506 A (FUJIFILM CORP) 10 January 2008 (2008-01-10) entire text | 1-7 |
| A | JP 1-203940 A (FUJI PHOTO FILM CO LTD) 16 August 1989 (1989-08-16) entire text | 1-7 |
| A | WO 2014/178178 A1 (KONICA MINOLTA, INC) 06 November 2014 (2014-11-06) entire text | 1–7 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 November 2022** | **06 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/034917**

| Patent document cited in search report | Publication date (day/month/year) | Patent family member(s) | Publication date (day/month/year) |
|---|---|---|---|
| WO 2021/187262 A1 | 23 September 2021 | (Family: none) | |
| JP 2008-3506 A | 10 January 2008 | (Family: none) | |
| JP 1-203940 A | 16 August 1989 | (Family: none) | |
| WO 2014/178178 A1 | 06 November 2014 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008003506 A
- JP 8245678 A
- JP H8245678 A
- JP 2012031313 A
- JP 2015227955 A